# EUROPEAN PATENT APPLICATION

(11) **EP 4 257 627 A1**
(43) Date of publication of application: **11.10.2023**
(21) Application number: 21900369.6
(22) Date of filing: 09.11.2021
(51) Int. Cl.: C08G 61/08, H01B 3/30, H01F 6/06

(54) **POLYMERIZABLE COMPOSITION AND RESIN-IMPREGNATED SUPERCONDUCTING COIL**

(30) Priority: 03.12.2020 JP 2020201189
(71) Applicant: RIMTEC Corporation, Tokyo 100-0005 (JP); National Institute for Materials Science, Tsukuba-shi, Ibaraki 305-0047 (JP)
(72) Inventor: TAKEUCHI, Masaki, Tokyo 100-0005 (JP); KIKUCHI, Akihiro, Tsukuba-shi, Ibaraki 305-0047 (JP); ICHINOSE, Izumi, Tsukuba-shi, Ibaraki 305-0047 (JP); HIRATA, Kazuto, Tsukuba-shi, Ibaraki 305-0047 (JP); IIJIMA, Yasuo, Tsukuba-shi, Ibaraki 305-0047 (JP)
(74) Representative: Gerauer, Marc Philippé
(86) International application number: PCT/JP2021/041238
(87) International publication number: WO 2022/118614

(57) **Abstract**

Provided is a polymerizable composition comprising a norbornene-based monomer, rare earth element-containing particles having a number-based modal size of 0.05 µm or more and less than 1.5 µm, and a metathesis polymerization catalyst.

## Description

### TECHNICAL FIELD

The present invention relates to a polymerizable composition suitably used in production of a resin-impregnated superconducting coil which has high reliability and can be cooled in a shorter time compared to traditional ones, and a resin-impregnated superconducting coil produced using such a polymerizable composition.

### BACKGROUND ART

Strong magnetic fields should be generated in nuclear magnetic resonance (NMR) instruments, magnetic resonance imaging (MRI) diagnostic apparatuses, heavy ion radiotherapy apparatuses, and superconducting apparatuses for superconducting Maglev railroad vehicles. For this reason, these apparatuses employ superconducting coils, and are operated at cryogenic temperatures, usually 20 K (-253°C) or less.

When the temperature is kept around 4 K (-269°C) by using liquid helium as a cryogen or by conductive cooling with a cryocooler, a superconducting coil reaches a superconducting state to conduct a large current with zero resistance, and generates a stronger magnetic field. On the other hand, the specific heats of many substances are reduced around a temperature of 4 K, and thus heat is more likely to invade from the outside, and thermal disturbance due to the heat locally increases the temperature of the superconducting coil to cause normal zones. When normal zones are again cooled to around 4 K, the superconducting coil can keep the superconducting state; however, a quench (transition from the superconducting state to the normal state) occurs once propagation of normal zones starts, and a large amount of heat may be instantaneously generated due to the Joule heat generated in quenched portions, leading to thermal runaway. When thermal runaway occurs, the superconducting coil may be burnt or liquid helium as a coolant may significantly evaporate.

For example, Patent Document 1 discloses a technique of forming a wire protective layer for protecting a superconducting wire constituting a superconducting coil from a composition for a wire protective layer comprising particles having a specific heat of 0.2 J/cm³·K or more in at least part of a temperature range of 4 K or more and 40 K or less, and a polymer material surrounding the particles. In Patent Document 1, examples of the polymer material included in the composition for a wire protective layer include epoxy resins, polyimide resins, phenol resins, urea resins, melamine resins, and the like.

### RELATED ART DOCUMENTS

### PATENT DOCUMENTS

Patent Document 1: JP 2020-47740 A

### SUMMARY OF THE INVENTION

### PROBLEM TO BE SOLVED BY THE INVENTION

However, in the technique disclosed in Patent Document 1, the composition for forming a wire protective layer for protecting a superconducting wire has high viscosity, which leads to incomplete impregnation into the superconducting coil or peel-off of the wire protective layer caused by thermal shrinkage of the polymer material during cooling of the superconducting coil. For this reason, occurrence of thermal runaway is insufficiently suppressed in some cases, conduction stability is not ensured, and the superconducting coil is less reliable. Moreover, in the technique disclosed in Patent Document 1, particles having a specific heat within a specific range are used. These particles have a relatively high specific heat, which leads to a problem that heat is likely to be accumulated and more time is taken to cool the superconducting coil.

The present invention has been made in consideration of such circumstances, and an object of the present invention is to provide a polymerizable composition suitably used in production of a resin-impregnated superconducting coil which has high reliability and can be cooled in a shorter time compared to traditional ones, and a resin-impregnated superconducting coil produced using such a polymerizable composition.

### MEANS FOR SOLVING PROBLEMS

The present inventors, who have conducted extensive research to solve the above problems, have found that the above object can be achieved by adding rare earth element-containing particles having a predetermined particle size to a polymerizable composition comprising a norbornene-based monomer and a metathesis polymerization catalyst, and have completed the present invention.

Specifically, the present invention provides a polymerizable composition comprising a norbornene-based monomer, rare earth element-containing particles having a number-based modal size of 0.05 µm or more and less than 1.5 µm, and a metathesis polymerization catalyst.

In the polymerizable composition according to the present invention, preferably, the rare earth element-containing particles contain at least one rare earth element selected from the group consisting of cerium, praseodymium, gadolinium, dysprosium, holmium, and erbium.

In the polymerizable composition according to the present invention, preferably, the content of the rare earth element-containing particles is 4 to 90% by mass. The content of the particles within these ranges above is preferred because a resin-impregnated superconducting coil having sufficient protective performance to the superconducting wire around a temperature of 4 K is obtained, and the composition before being cured has high fluidity and is easy to impregnate into the superconducting coil.

Preferably, the polymerizable composition according to the present invention is in the form of two or more preparative liquid formulations each of which alone is not capable of polymerization, and can be formed by combining the preparative liquid formulations.

The present invention also provides a resin-impregnated superconducting coil prepared by impregnating a superconducting coil with a norbornene-based resin prepared through bulk polymerization of the polymerizable composition.

In the resin-impregnated superconducting coil according to the present invention, preferably, the norbornene-based resin has a specific heat at a temperature of 4 K of 3.0 J/K/kg or more.

In the resin-impregnated superconducting coil according to the present invention, preferably, the superconducting coil is a superconducting coil for generating a magnetic field in a nuclear magnetic resonance (NMR) instrument, a magnetic resonance imaging (MRI) diagnostic apparatus, or a heavy ion radiotherapy apparatus.

### EFFECTS OF INVENTION

The present invention can provide a polymerizable composition suitably used in production of a resin-impregnated superconducting coil which has high reliability and can be cooled in a shorter time compared to traditional ones, and a resin-impregnated superconducting coil produced using such a polymerizable composition.

### BRIEF DESCRIPTION OF DRAWINGS

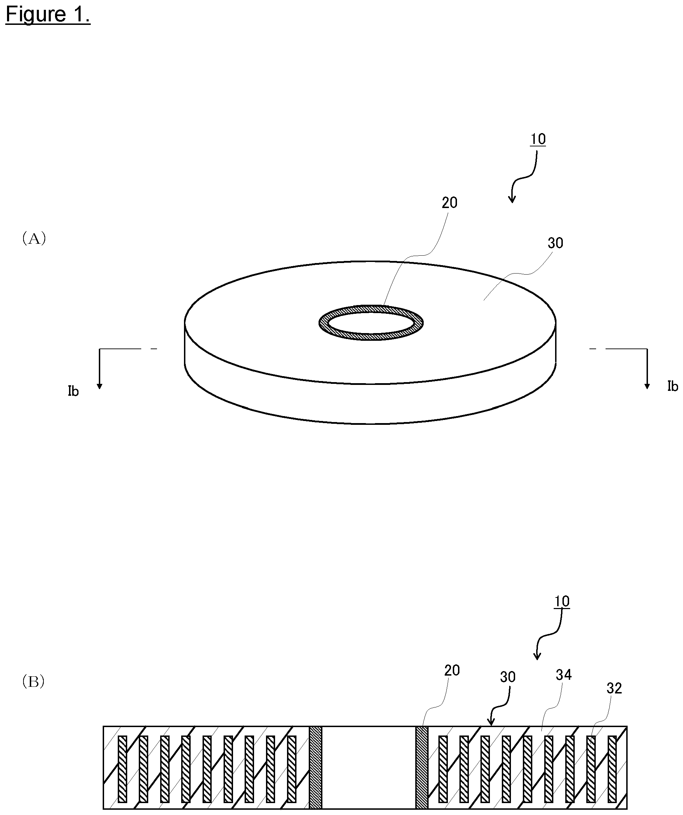

Fig. 1(A) is a schematic perspective view of the resin-impregnated superconducting coil according to one embodiment of the present invention, and Fig. 1(B) is a schematic cross-sectional view of the resin-impregnated superconducting coil according to one embodiment of the present invention.

### DESCRIPTION OF EMBODIMENTS

### <Polymerizable composition>

The polymerizable composition according to the present invention comprises a norbornene-based monomer, rare earth element-containing particles having a number-based modal size of 0.05 µm or more and less than 1.5 µm, and a metathesis polymerization catalyst.

The polymerizable composition according to the present invention comprises a norbornene-based monomer, and thus has low viscosity. For this reason, when used for a superconducting coil, the polymerizable composition according to the present invention demonstrates sufficient impregnation properties to the superconducting coil. For this reason, the polymerizable composition according to the present invention can be suitably used in production of a resin-impregnated superconducting coil.

In addition to this, while the norbornene-based resin prepared from the polymerizable composition according to the present invention has high mechanical properties even at a cryogenic temperature, it has relatively low bonding strength to a superconducting wire constituting the superconducting coil. For this reason, breakage of the superconducting coil due to tensile stress caused by thermal shrinkage can be suppressed even when thermal shrinkage of the norbornene-based resin occurs during cooling, and thus occurrence of a quench caused by breakage of the superconducting coil can be effectively suppressed.

In addition, the polymerizable composition according to the present invention comprises rare earth element-containing particles having a number-based modal size of 0.05 µm or more and less than 1.5 µm. Because such rare earth element-containing particles have high thermal storage properties, the norbornene-based resin prepared from the polymerizable composition according to the present invention can have a high specific heat at a cryogenic temperature, and thus can effectively suppress occurrence of a quench. Furthermore, because the rare earth element-containing particles act to absorb the generated heat and relaxation of an increase in temperature, occurrence of thermal runaway can be effectively suppressed particularly at a cryogenic temperature of 20 K (-253°C) or less where specific heat decreases. The rare earth element-containing particles used are ultrafine particles which have a large specific surface area. Due to their excellent heat dissipating effect, a resin-impregnated superconducting coil which can be cooled in a shorter time compared to traditional ones can be obtained.

The norbornene-based monomer can be any compound having a norbornene ring structure, and is not particularly limited. Examples thereof include bicyclic compounds such as norbornene and norbornadiene; tricyclic compounds such as dicyclopentadiene; tetracyclic compounds such as tetracyclododecene; pentacyclic compounds such as tricyclopentadiene; heptacyclic compounds such as tetracyclopentadiene; derivatives thereof having a C₂ to C₁₀ alkenyl group, a C₂ to C₁₀ alkynyl group, a C₁ to C₁₀ alkylidene group, an epoxy group, or an (meth)acrylic group; and the like. These norbornene-based monomers can be used alone or in combination. As the norbornene-based monomer, preferred are the tricyclic compounds, and particularly preferred is dicyclopentadiene because they can further enhance the effects of the present invention. The norbornene-based monomer to be used preferably contains the tricyclic compound, especially dicyclopentadiene in a proportion of 50% by mass or more. Another preferred norbornene-based monomer is a combination of the tricyclic compound and the pentacyclic compound. In this case, the mass ratio "tricyclic compound:pentacyclic compound" is preferably 60:40 to 97:3, more preferably 80:20 to 95:5.

The polymerizable composition according to the present invention can contain the norbornene-based monomer in any proportion. The content thereof is preferably 50% by mass or more, more preferably 60% by mass or more, still more preferably 70% by mass or more in 100% by mass of the total polymerizable monomers contained in the polymerizable composition, and may be 100% by mass. By controlling the content of the norbornene-based monomer within these ranges, a norbornene-based resin prepared from the polymerizable composition according to the present invention can have sufficiently reduced bonding strength to a superconducting wire constituting a superconducting coil while having further enhanced mechanical properties at a cryogenic temperature.

In the present invention, a monocyclic cycloolefin may be further used as a polymerizable monomer contained in the polymerizable composition.

Examples of monocyclic cycloolefins include, but should not be limited to, cyclobutene, cyclopentene, cyclohexene, cyclooctene, cyclododecene, cyclopentadiene, 1,4-cyclohexadiene, 1,5-cyclooctadiene, derivatives thereof having a C₂ to C₁₀ alkenyl group, a C₂ to C₁₀ alkynyl group, a C₁ to C₁₀ alkylidene group, an epoxy group, or an (meth)acrylic group, and the like. These monocyclic cycloolefins can be used alone or in combination.

Besides the norbornene-based monomer and the monocyclic cycloolefin, the polymerizable composition according to the present invention may also contain a different polymerizable monomer polymerizable therewith. Examples of such different polymerizable monomers include other cycloolefin monomers.

In the polymerizable composition according to the present invention, the content of the different polymerizable monomer other than norbornene-based monomers is not particularly limited, and is preferably 50% by mass or less, more preferably 40% by mass or less, still more preferably 30% by mass or less in 100% by mass of the total polymerizable monomers contained in the polymerizable composition, and may be 0% by mass.

In the polymerizable composition according to the present invention, the total content of the polymerizable monomers including the norbornene-based monomer is preferably 10 to 95% by mass, more preferably 15 to 93% by mass, still more preferably 20 to 90% by mass in 100% by mass of the entire polymerizable composition.

The rare earth element-containing particles used in the present invention have a number-based modal size in the range of 0.05 µm or more and less than 1.5 um.

Any rare earth element-containing particles can be used in the present invention as long as they contain a rare earth element. Preferred are those containing at least one rare earth element selected from cerium, praseodymium, gadolinium, dysprosium, holmium, and erbium. From the viewpoint of high specific heat and high thermal storage properties, preferred are those containing at least one rare earth element compound selected from the group consisting of CeCu₆, CeAl₂, HoCu₂, Er₃Ni, PrB₆, PrCu₂, DyCu₂, GdCu₂, Gd₂O₃, and Gd₂O₂S, and more preferred are those containing Gd₂O₃.

The rare earth element-containing particles used in the present invention may further contain a metal oxide such as silver oxide (Ag₂O) or copper oxide (Cu₂O) or a metal such as bismuth (Bi) or lead (Pb) .

The rare earth element-containing particles used in the present invention have a number-based modal size in the range of 0.05 µm or more and less than 1.5 um. The number-based modal size indicates the particle size with the largest probability of presence of particles in terms of the number of particles, and the particle size at which a particle size distribution curve where the frequency of particle size in terms of the number of particles is plotted against the particle size in logarithm reaches its maximum value can be defined as the number-based modal size. When rare earth element-containing particles having a number-based modal size in the range of 0.05 µm or more and less than 1.5 µm are used, while such rare earth element-containing particles demonstrate thermal storage properties, these are ultrafine particles, have a large specific surface area, and have excellent heat dissipating properties. Thus, when the polymerizable composition according to the present invention is used for a superconducting coil, a resin-impregnated superconducting coil which can be cooled in a shorter time compared with traditional ones can be obtained. The rare earth element-containing particles used in the present invention have a number-based modal size of preferably 0.07 to 1.3 µm, more preferably 0.1 to 1.2 µm, still more preferably 0.7 to 1.1 µm. The number-based modal size of the rare earth element-containing particles can be calculated by determining a number-based particle size distribution from a particle size distribution measured by a light scattering method (laser diffraction/scattering method).

The rare earth element-containing particles can have any shape without limitation, and examples thereof include spherical shapes, bale-like shapes, spheroidal shapes, cylindrical shapes, fibrous shapes, amorphous shapes, and the like. A mixture of particles having some of these shapes may be used. For example, a combination of spherical rare earth element-containing particles and cylindrical rare earth element-containing particles may be used. Alternatively, the rare earth element-containing particles may be a mixture of two or more types of particles having different compositions.

Alternatively, the rare earth element-containing particles may be particles of a rare earth element compound containing a rare earth element and having surfaces on which a coating layer of a metal having high conductivity and thermal conductivity is formed. Examples of such a metal having high conductivity and thermal conductivity include silver, gold, nickel, copper, and the like.

The rare earth element-containing particles used in the present invention may have hydrophobized surfaces. Use of hydrophobized rare earth element-containing particles can prevent aggregation and sedimentation of the particles in the polymerizable composition, and enables homogeneous dispersion of the particles in the norbornene-based resin prepared through bulk polymerization of the polymerizable composition. Examples of a treatment agent used in hydrophobization include silane coupling agents, titanate coupling agents, aluminum coupling agents, fatty acids such as stearic acid, oils and fats, surfactants, waxes, and the like. The treatment agent, when used, can also be simply compounded with the rare earth element-containing particles in the polymerizable composition.

The treatment agent to be used is preferably a silane coupling agent having at least one hydrocarbon group having a norbornene structure because the polymerizable composition, even after addition of the rare earth element-containing particles, has a low viscosity and has thixotropy (viscosity in a static state) which is unlikely to increase. Although the silane coupling agent can also function as a monomer, the silane coupling agent is regarded as a coupling agent in the present invention. Specific examples of such a silane coupling agent include bicycloheptenyltrimethoxysilane, bicycloheptenyltriethoxysilane, bicycloheptenylethyltrimethoxysilane, bicycloheptenylethyltriethoxysilane, and the like.

These treatment agents can be used alone or in combination. The content of the treatment agent in the polymerizable composition according to the present invention is preferably 0.1 to 5% by mass, more preferably 0.3 to 2% by mass, still more preferably 0.5 to 1% by mass.

The content of the rare earth element-containing particles in the polymerizable composition according to the present invention is preferably 4 to 90% by mass, more preferably 7 to 85% by mass, still more preferably 10 to 84% by mass, further still more preferably 70 to 83% by mass, particularly preferably 75 to 82% by mass in 100% by mass of the entire polymerizable composition. When the content of the rare earth element-containing particles falls within these ranges above, sufficient protection performance to the superconducting wire can be obtained while the polymerizable composition when uncured can have sufficiently high fluidity.

The metathesis polymerization catalyst used in the present invention can be any metathesis polymerization catalyst as long as it can ring-opening polymerize the norbornene-based monomer, and known metathesis polymerization catalysts can be used.

The metathesis polymerization catalyst used in the present invention is a complex having a transition metal atom as a central atom to which a plurality of ions, atoms, polyatomic ions, and/or compounds are bonded. As the transition metal atom, atoms of Groups 5, 6, and 8 (Long Periodic Table, hereinafter, the same is applied) are used. Although there is no particular limitation to the atoms of the respective groups, examples of atoms of Group 5 include tantalum, examples of atoms of Group 6 include molybdenum and tungsten, and examples of atoms of Group 8 include ruthenium and osmium. Among these transition metal atoms, preferred are ruthenium and osmium of Group 8. That is, the metathesis polymerization catalyst used in the present invention is preferably a complex having ruthenium or osmium as the central atom, more preferably a complex having ruthenium as the central atom. The complex having ruthenium as the central atom is preferably a ruthenium carbene complex in which a carbene compound is coordinated with ruthenium. Here, the "carbene compound" is a generic name for a compound having a methylene free radical, and refers to a compound having an uncharged divalent carbon atom (carbene carbon) represented by (>C:). Because the ruthenium carbene complex has high catalytic activity during bulk ring-opening polymerization, a high-quality polymer having a low odor derived from unreacted monomers is prepared with high productivity. The ruthenium carbene complex, which is relatively stable to oxygen or moisture in the air and is hardly deactivated, can also be used under the air. These metathesis polymerization catalysts may be used alone or in combination.

Examples of the ruthenium carbene complex include those represented by General Formula (1) or (2) below:

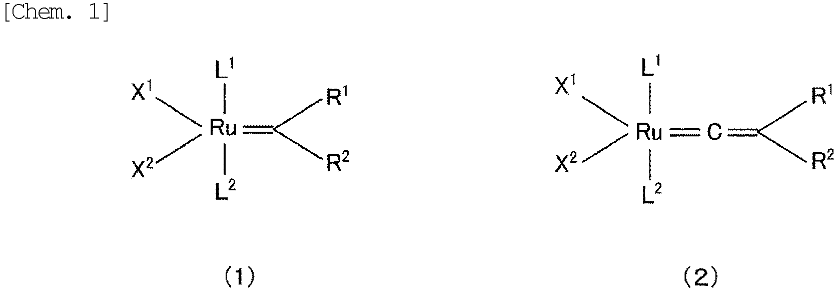

In General Formulae (1) and (2) above, R¹ and R² each independently represent a hydrogen atom, a halogen atom, or a C₁ to C₂₀ organic group which may contain a halogen atom, an oxygen atom, a nitrogen atom, a sulfur atom, a phosphorus atom, or a silicon atom; and these groups may be substituted, or may be bonded to each other to form a ring. Examples of R¹ and R² bonded to each other to form a ring include indenylidenes which may be substituted, such as a phenylindenylidene group.

Specific examples of the C₁ to C₂₀ organic group which may contain a halogen atom, an oxygen atom, a nitrogen atom, a sulfur atom, a phosphorus atom, or a silicon atom include C₁ to C₂₀ alkyl groups, C₂ to C₂₀ alkenyl groups, C₂ to C₂₀ alkynyl groups, C₆ to C₂₀ aryl groups, C₁ to C₂₀ alkoxy groups, C₂ to C₂₀ alkenyloxy groups, C₂ to C₂₀ alkynyloxy groups, C₆ to C₂₀ aryloxy groups, C₁ to C₈ alkylthio groups, a carbonyloxy group, C₁ to C₂₀ alkoxycarbonyl groups, C₁ to C₂₀ alkylsulfonyl groups, C₁ to C₂₀ alkylsulfinyl groups, C₁ to C₂₀ alkylsulfonic acid groups, C₆ to C₂₀ arylsulfonic acid groups, a phosphonic acid group, C₆ to C₂₂ arylphosphonic acid groups, C₂ to C₂₀ alkylammonium groups, C₆ to C₂₀ arylammonium groups, and the like. These C₁ to C₂₀ organic groups which may contain a halogen atom, an oxygen atom, a nitrogen atom, a sulfur atom, a phosphorus atom, or a silicon atom may be substituted. Examples of substituents include C₁ to C₁₀ alkyl groups, C₁ to C₁₀ alkoxy groups, C₆ to C₁₀ aryl groups, and the like.

X¹ and X² each independently represent any anionic ligand. The anionic ligand is a ligand having a negative charge when separated from a central metal atom, and examples thereof include halogen atoms, diketonate groups, substituted cyclopentadienyl groups, alkoxyl groups, aryloxy groups, a carboxyl group, and the like.

L¹ and L² represent a heteroatom-containing carbene compound or a neutral electron-donating compound other than the heteroatom-containing carbene compound. The heteroatom-containing carbene compound and the neutral electron-donating compound other than the heteroatom-containing carbene compound are compounds having a neutral charge when separated from the central metal. To improve catalytic activity, preferred is the heteroatom-containing carbene compound. The heteroatom indicates atoms of Groups 15 and 16 in the Periodic Table, and specifically examples thereof include a nitrogen atom, an oxygen atom, a phosphorus atom, a sulfur atom, an arsenic atom, a selenium atom, and the like. Among these, preferred are a nitrogen atom, an oxygen atom, a phosphorus atom, and a sulfur atom, and more preferred is a nitrogen atom to obtain a stable carbene compound.

The heteroatom-containing carbene compound is preferably a compound represented by General Formula (3) or (4) below. To improve catalytic activity, more preferred is a compound represented by General Formula (3) below:

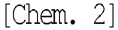

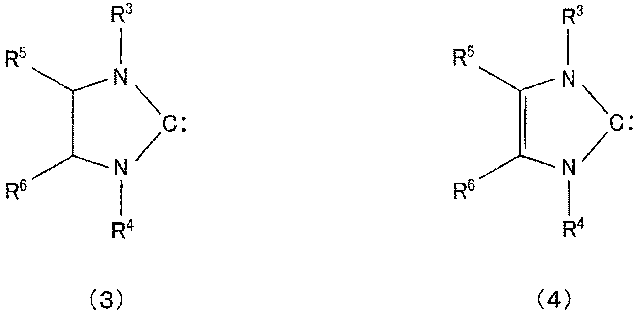

In General Formulae (3) and (4) above, R³, R⁴, R⁵, and R⁶ each independently represent a hydrogen atom; a halogen atom; or a C₁ to C₂₀ organic group which may contain a halogen atom, an oxygen atom, a nitrogen atom, a sulfur atom, a phosphorus atom, or a silicon atom. Specific examples of the C₁ to C₂₀ organic group which may contain a halogen atom, an oxygen atom, a nitrogen atom, a sulfur atom, a phosphorus atom, or a silicon atom are the same as those listed in General Formulae (1) and (2) above.

R³, R⁴, R⁵, and R⁶ may also be bonded to each other in any combination to form a ring.

Since the effects of the present invention become more prominent, R⁵ and R⁶ are preferably a hydrogen atom. R³ and R⁴ are preferably an aryl group which may be substituted, more preferably a phenyl group having a C₁ to C₁₀ alkyl group as a substituent, still more preferably a mesityl group.

Examples of the neutral electron-donating compound include an oxygen atom, water, carbonyls, ethers, nitriles, esters, phosphines, phosphinites, phosphites, sulfoxides, thioethers, amides, imines, aromatics, cyclic diolefins, olefins, isocyanides, thiocyanates, and the like.

In General Formulae (1) and (2) above, R¹, R², X¹, X², L¹, and L² may stand alone and/or may be bonded to each other in any combination to form a multidentate chelating ligand.

Among these compounds represented by General Formula (1) or (2) above, preferred are compounds represented by General Formula (1) as the ruthenium carbene complex used in the present invention, since the effects of the present invention become more prominent. Among these, more preferred are compounds represented by General Formula (5) or (6) below.

General Formula (5) is shown below:

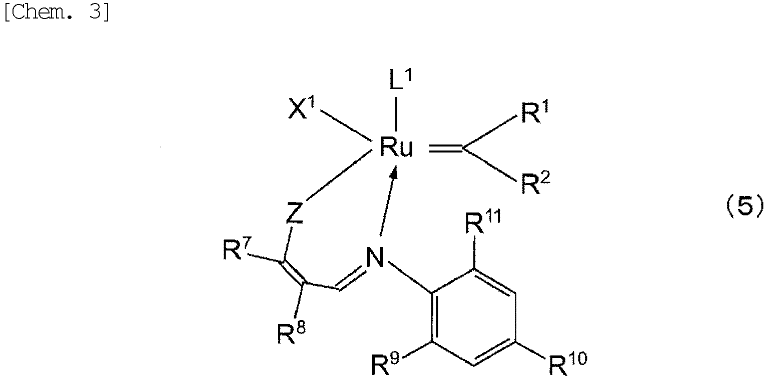

In General Formula (5) above, Z is an oxygen atom, a sulfur atom, a selenium atom, NR¹², PR¹², or AsR¹²; and R¹² is a hydrogen atom, a halogen atom, or a C₁ to C₂₀ organic group which may contain a halogen atom, an oxygen atom, a nitrogen atom, a sulfur atom, a phosphorus atom, or a silicon atom. Since the effects of the present invention become more prominent, Z is preferably an oxygen atom.

R¹, R², X¹, and L¹ are the same as those in General Formulae (1) and (2) above, and may stand alone and/or may be bonded to each other in any combination to form a multidentate chelating ligand. It is preferred that X¹ and L¹ do not form a multidentate chelating ligand and R¹ and R² be bonded to each other to form a ring, which is more preferably an indenylidene group which may be substituted, still more preferably a phenylindenylidene group.

Specific examples of the C₁ to C₂₀ organic group which may contain a halogen atom, an oxygen atom, a nitrogen atom, a sulfur atom, a phosphorus atom, or a silicon atom are the same as those in General Formulae (1) and (2) above.

In General Formula (5) above, R⁷ and R⁸ are each independently a hydrogen atom, a C₁ to C₂₀ alkyl group, a C₂ to C₂₀ alkenyl group, or a C₆ to C₂₀ heteroaryl group. These groups may be substituted, or may be bonded to each other to form a ring. Examples of substituents include C₁ to C₁₀ alkyl groups, C₁ to C₁₀ alkoxy groups, or C₆ to C₁₀ aryl group. Although the ring when it is formed by R⁷ and R⁸ may be any one of an aromatic ring, an alicyclic ring, and a heterocyclic ring, R⁷ and R⁸ preferably form an aromatic ring, more preferably a C₆ to C₂₀ aromatic ring, still more preferably a C₆ to C₁₀ aromatic ring.

In General Formula (5) above, R⁹, R¹⁰, and R¹¹ are each independently a hydrogen atom; a halogen atom; or a C₁ to C₂₀ organic group which may contain a halogen atom, an oxygen atom, a nitrogen atom, a sulfur atom, a phosphorus atom, or a silicon atom. These groups may be substituted, or may be bonded to each other to form a ring. Specific examples of the C₁ to C₂₀ organic group which may contain a halogen atom, an oxygen atom, a nitrogen atom, a sulfur atom, a phosphorus atom, or a silicon atom are the same as those in General Formulae (1) and (2) above.

R⁹, R¹⁰, and R¹¹ are preferably a hydrogen atom or a C₂ to C₂₀ alkyl group, more preferably a hydrogen atom or a C₁ to C₃ alkyl group.

Specific examples of the compound represented by General Formula (5) above and a method of producing the same include those described in WO 2003/062253 (JP 2005-515260 T).

General Formula (6) is shown below:

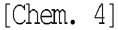

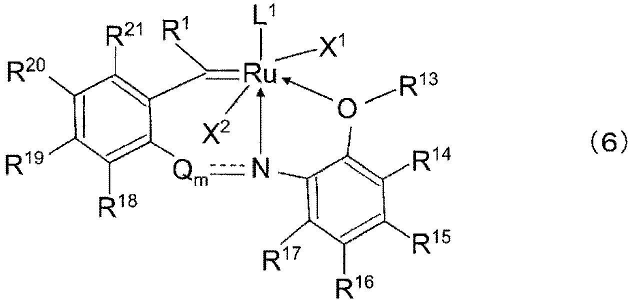

In General Formula (6) above, m is 0 or 1. m is preferably 1, and in this case, Q is an oxygen atom, a nitrogen atom, a sulfur atom, a methylene group, an ethylene group, or a carbonyl group, preferably a methylene group.

In General Formula (6) above,

[Chem. 5] - - - -

is a single bond or a double bond, preferably a single bond.

R¹, X¹, X², and L¹ are the same as those in General Formulae (1) and (2) above, and may stand alone and/or may be bonded to each other in any combination to form a multidentate chelating ligand. Preferably, X¹, X², and L¹ do not form a multidentate chelating ligand and R¹ is a hydrogen atom.

R¹³ to R²¹ are a hydrogen atom, a halogen atom, or a C₁ to C₂₀ organic group which may contain a halogen atom, an oxygen atom, a nitrogen atom, a sulfur atom, a phosphorus atom, or a silicon atom. These groups may be substituted, or may be bonded to each other to form a ring. Specific examples of the C₁ to C₂₀ organic group which may contain a halogen atom, an oxygen atom, a nitrogen atom, a sulfur atom, a phosphorus atom, or a silicon atom are the same as those in General Formulae (1) and (2) above.

R¹³ is preferably a C₁ to C₂₀ alkyl group, more preferably a C₁ to C₃ alkyl group. R¹⁴ to R¹⁷ are preferably a hydrogen atom, and R¹⁸ to R²¹ are preferably a hydrogen atom or a halogen atom.

Specific examples of the compound represented by General Formula (6) above and a method for producing the same include those described in WO 2011/079799 (JP 2013-516392 T).

The content of the metathesis polymerization catalyst is preferably 0.005 mmol or more, more preferably 0.01 to 50 mmol, still more preferably 0.015 to 20 mmol relative to 1 mol of the total amount of the polymerizable monomers used in the reaction.

The polymerizable composition according to the present invention may contain a radical generator, a diisocyanate compound, a polyfunctional (meth)acrylate compound, and other optional components as desired.

The radical generator, when heated, generates radicals, by which the radical generator induces a cross-linking reaction in a norbornene-based resin formed through bulk polymerization. The sites at which the cross-linking reaction is induced by the radical generator are mainly carbon-carbon double bonds of the norbornene-based resin while saturated bonds may also be cross-linked in some cases. Examples of the radical generator include organic peroxides, diazo compounds, and nonpolar radical generators.

The amount of the radical generator in the polymerizable composition according to the present invention is preferably 0.1 to 10 parts by mass, more preferably 0.5 to 5 parts by mass relative to 100 parts by mass of the total amount of the polymerizable monomers used in the reaction.

Examples of the diisocyanate compounds include aromatic diisocyanate compounds such as methylenediphenyl 4,4'-diisocyanate (MDI), toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 1,4-phenylene diisocyanate, tolylene diisocyanate, xylylene diisocyanate (XDI), 1,5-naphthalene diisocyanate, benzidine diisocyanate, o-nitrobenzidine diisocyanate, and dibenzyl 4,4'-diisocyanate; aliphatic diisocyanate compounds such as methylene diisocyanate, 1,4-tetramethylene diisocyanate, 1,6-hexamethylene diisocyanate, and 1,10-decamethylene diisocyanate; alicyclic diisocyanate compounds such as 4-cyclohexylene diisocyanate, 4,4'-methylene bis(cyclohexyl isocyanate), 1,5-tetrahydronaphthalene diisocyanate, isophorone diisocyanate, hydrogenated MDI, and hydrogenated XDI; and polyurethane prepolymers terminated with isocyanate, which are prepared by reacting these diisocyanate compounds with a low molecular weight polyol or polyamine; and the like. In addition, known isocyanurate forms, biuret forms, adduct forms, or polymeric forms of these compounds, which have a polyfunctional isocyanate group and are conventionally used, can be used without limitation. Examples thereof include dimers of 2,4-toluylene diisocyanate, triphenylmethane triisocyanate, tris-(p-isocyanate phenyl) thiophosphite, polyfunctional aromatic isocyanate compounds, polyfunctional aromatic aliphatic isocyanate compounds, polyfunctional aliphatic isocyanate compounds, fatty acid-modified polyfunctional aliphatic isocyanate compounds, block-type polyfunctional isocyanate compounds such as blocked polyfunctional aliphatic isocyanate compounds, polyisocyanate prepolymers, and the like. Among these, suitably used are aromatic diisocyanate compounds, aliphatic diisocyanate compounds, and alicyclic diisocyanate compounds, which are non-block-type polyfunctional isocyanate compounds, because of their availability and ease in handling.

These compounds can be used alone or in combination.

The block-type polyfunctional isocyanate compound indicates an isocyanate compound having at least two isocyanate groups in the molecule which are inactivated at normal temperature through a reaction with an active hydrogen-containing compound. The isocyanate compound usually has a structure having isocyanate groups masked with a blocking agent, examples of the blocking agent including alcohols, phenols, ε-caprolactam, oximes, active methylene compounds, and the like. The block-type polyfunctional isocyanate compound is usually not reactive at normal temperature, leading to high storage stability, while it exhibits high reactivity due to the isocyanate groups regenerated when heated usually at 140 to 200°C.

These diisocyanate compound may be used alone or in combination. The compounding amount of the diisocyanate compound in the polymerizable composition according to the present invention is preferably 0.5 to 20 parts by mass, more preferably 1 to 15 parts by mass, still more preferably 2 to 10 parts by mass relative to 100 parts by mass of the total amount of the polymerizable monomers used in the reaction.

To further improve the cryogenic mechanical properties of the norbornene-based resin prepared from the polymerizable composition according to the present invention, a polyfunctional (meth)acrylate compound may be used. When the polyfunctional (meth)acrylate compound is used in combination with the diisocyanate compound, the diisocyanate compound forms chemical bonds between its active hydrogen reactive groups in the molecule and hydroxyl groups present in the polyfunctional (meth)acrylate compound, and as a result, the cryogenic mechanical properties of the norbornene-based resin can be further enhanced. Preferred examples of the polyfunctional (meth)acrylate compound include ethylene glycol dimethacrylate, triethylene glycol dimethacrylate, trimethylolpropane trimethacrylate, and neopentyl glycol dimethacrylate.

These polyfunctional (meth)acrylate compounds may be used alone or in combination. The compounding amount of the polyfunctional (meth)acrylate compound in the polymerizable composition according to the present invention is preferably 0.5 to 20 parts by mass, more preferably 1 to 15 parts by mass, still more preferably 2 to 10 parts by mass relative to 100 parts by mass of the total amount of the polymerizable monomers used in the reaction.

Examples of other optional components include activating agents, activity regulators, elastomers, antioxidants (anti-aging agents), dispersants, and the like.

The activating agent is a compound which acts as a cocatalyst for the above-mentioned metathesis polymerization catalyst to improve the polymerization activity of the catalyst. Examples of activating agents to be used include alkylaluminum halides such as ethylaluminum dichloride and diethylaluminum chloride; alkoxyalkylaluminum halides prepared by substituting part of alkyl groups in these alkylaluminum halides with an alkoxy group; organic tin compounds; and the like. The activating agent can be used in any amount, and the amount is preferably 0.1 to 100 mol, more preferably 1 to 10 mol relative to 1 mol of the total metathesis polymerization catalysts used in the polymerizable composition.

As described later, when two or more reaction stock solutions are mixed to prepare a polymerizable composition, the polymerizable composition is injected into a mold, and polymerization is initiated, the activity regulator is used to prevent the polymerization from starting during the injection.

When a compound of a transition metal in Group 5 or 6 in the Periodic Table is used as the metathesis polymerization catalyst, examples of activity regulators include compounds having action to reduce the metathesis polymerization catalyst, and the like. Alcohols, haloalcohols, esters, ethers, nitriles, and the like can be used. Among these, preferred are alcohols and haloalcohols, and more preferred are haloalcohols.

Specific examples of alcohols include n-propanol, n-butanol, n-hexanol, 2-butanol, isobutyl alcohol, isopropyl alcohol, t-butyl alcohol, and the like. Specific examples of haloalcohols include 1,3-dichloro-2-propanol, 2-chloroethanol, 1-chlorobutanol, and the like.

In particular, when a ruthenium carbene complex metathesis is used as the polymerization catalyst, examples of the activity regulator include Lewis base compounds. Examples of the Lewis base compounds include Lewis base compounds containing a phosphorus atom, such as tricyclopentyl phosphine, tricyclohexyl phosphine, triphenyl phosphine, triphenyl phosphite, and n-butyl phosphine; Lewis base compounds containing a nitrogen atom, such as n-butylamine, pyridine, 4-vinylpyridine, acetonitrile, ethylenediamine, N-benzylidenemethylamine, pyrazine, piperidine, and imidazole; and the like. In addition, norbornenes substituted by an alkenyl group, such as vinyl norbornene, propenyl norbornene, and isopropenyl norbornene, are the polymerizable monomers described above, and also act as the activity regulator. The amount of these activity regulators may be appropriately adjusted depending on the compound to be used.

Examples of the elastomers include natural rubber, polybutadiene, polyisoprene, styrene-butadiene copolymers (SBR), styrene-butadiene-styrene copolymers (SBS), styrene-isoprene-styrene copolymers (SIS), ethylene-propylene-diene terpolymers (EPDM), ethylene-vinyl acetate copolymers (EVA), hydrides thereof, and the like. The viscosity of the elastomer can be adjusted for use by dissolving the elastomer in the polymerizable composition. By adding the elastomer, a norbornene-based resin having improved impact resistance can be formed through bulk polymerization of the composition. The amount of the elastomer used is preferably 0.5 to 20 parts by mass, more preferably 2 to 10 parts by mass relative to 100 parts by mass of the total amount of the polymerizable monomers in the polymerizable composition.

Examples of antioxidants (anti-aging agents) include a variety of antioxidants for plastics and rubbers, such as phenol antioxidants, phosphorus antioxidants, and amine antioxidants. As the dispersant, anionic surfactants, cationic surfactants, and nonionic surfactants can be optionally used. Preferred are nonionic surfactants.

The polymerizable composition according to the present invention is prepared by appropriately mixing the above-mentioned components according to a known method. The polymerizable composition according to the present invention may be prepared by preparing two or more preparative liquid formulations, and mixing the two or more preparative liquid formulations with a mixing apparatus immediately before bulk polymerization to form a norbornene-based resin . For the preparative liquid formulations, the above-mentioned components are distributed and prepared into two or more solutions such that each of them alone is not capable of bulk polymerization, and when all the solutions are mixed, they can form the polymerizable composition containing the above-mentioned components in predetermined proportions (where the total content of the components is 100% by mass). Examples of a combination of such two or more reaction stock solutions include two combinations (a) and (b) below depending on the type of the metathesis polymerization catalyst used.

(a): The metathesis polymerization catalyst to be used can be a metathesis polymerization catalyst which alone has not polymerization reaction activity while exhibiting polymerization reaction activity when used in combination with the activating agent. In this case, a preparative liquid formulation (solution A) containing the polymerizable monomer containing the norbornene-based monomer and the activating agent and a preparative liquid formulation (solution B) containing the polymerizable monomer containing the norbornene-based monomer and the metathesis polymerization catalyst are used, and the polymerizable composition can be prepared by mixing these. Furthermore, a preparative liquid formulation (solution C) containing the polymerizable monomer containing the norbornene-based monomer but not any of the metathesis polymerization catalyst and the activating agent may be used in combination.

(b): When a metathesis polymerization catalyst which alone has polymerization reaction activity is used, the polymerizable composition can be prepared by mixing a preparative liquid formulation (i) containing the polymerizable monomer containing the norbornene-based monomer and a preparative liquid formulation (ii) containing the metathesis polymerization catalyst. At this time, the preparative liquid formulation (ii) to be used is usually in the form of a solution or dispersion of the metathesis polymerization catalyst in a small amount of an inert solvent. Examples of such a solvent include aromatic hydrocarbons such as toluene, xylene, ethylbenzene, and trimethylbenzene; ketones such as methyl ethyl ketone, cyclopentanone, cyclohexanone, 2-heptanone, and 4-hydroxy-4-methyl-2-pentanone; cyclic ethers such as tetrahydrofuran; diethyl ether, dichloromethane, dimethyl sulfoxide, ethyl acetate, and the like.

The optional components such as the radical generator, the diisocyanate compound, and the polyfunctional (meth)acrylate compound may be contained in any one of the preparative liquid formulations, or may be added in the form of a mixed solution other than the preparative liquid formulations.

Examples of the mixing apparatus used in mixing of the preparative liquid formulations above include collision mixing apparatuses usually used in reaction injection molding, low pressure mixers such as dynamic mixers and static mixers, and the like.

### <Resin-impregnated superconducting coil>

The resin-impregnated superconducting coil according to the present invention is formed by impregnating a superconducting coil with the norbornene-based resin prepared through bulk polymerization of the above-described polymerizable composition according to the present invention. In other words, the resin-impregnated superconducting coil according to the present invention is a superconducting coil impregnated with the norbornene-based resin prepared through bulk polymerization of the polymerizable composition according to the present invention.

Here, Fig. 1(A) is a schematic perspective view of a resin-impregnated superconducting coil 10 according to an embodiment of the present invention, and Fig. 1(B) is a schematic cross-sectional view of the resin-impregnated superconducting coil 10 according to the embodiment of the present invention. Although the resin-impregnated superconducting coil 10 according to an embodiment of the present invention shown in Figs. 1(A) and 1(B) will be illustrated below to describe the resin-impregnated superconducting coil according to the present invention, the present invention will not be limited to the embodiment shown in Figs. 1(A) and 1(B).

As shown in Fig. 1(A), the resin-impregnated superconducting coil 10 according to the present embodiment includes a winding frame 20 and a coil body 30 formed around the winding frame 20. Fig. 1(B) is a cross-sectional view of the resin-impregnated superconducting coil 10 taken along line Ib-Ib in Fig. 1(A). As shown in Fig. 1(B), the coil body 30 includes a superconducting wire 32 and a wire protective layer 34.

The winding frame 20 is formed of a glass fiber-reinforced composite material, a high-strength polyethylene fiber-reinforced composite material, stainless steel, aluminum, or the like, for example, and the superconducting wire 32 is wound around the winding frame 20 concentrically therewith. The wire protective layer 34 is a protective layer for protecting the superconducting wire 32. In the present embodiment, the wire protective layer 34 is formed with the norbornene-based resin prepared through bulk polymerization of the above-mentioned polymerizable composition according to the present invention.

The resin-impregnated superconducting coil 10 may be configured such that the coil body 30 includes an insulating plate on the top surface of the coil body 30 and/or the bottom surface thereof.

The resin-impregnated superconducting coil 10 according to the present embodiment can be produced by a first production method or a second production method described below.

Specifically, in the first production method, the resin-impregnated superconducting coil 10 is produced by winding the superconducting wire 32 around the winding frame 20 while the polymerizable composition according to the present invention is being applied to the superconducting wire, and then polymerizing and curing the polymerizable composition.

Examples of the superconducting wire 32 include wires containing superconducting materials such as niobium titanium alloys, A15 intermetallic compounds (such as niobium 3 tin, niobium 3 aluminum, vanadium 3 gallium), magnesium diboride, rare earth element barium copper oxide (REBa₂Cu₃O₇: REBCO) containing yttrium barium copper oxide (YBa₂Cu₃O₇: YBCO) or gadolinium barium copper oxide (GdBa₂Cu₃O₇: GdBCO), bismuth strontium copper oxides (Bi₂Sr₂CaCu₂O_{X}: Bi2212, Bi₂Sr₂Ca₂Cu₃O_{X}: Bi2223), and the like. With respect to the shape, examples of the superconducting wire 32 include round wires, rectangular wires, twisted wires, tape wires, and the like. Fig. 1(B) illustrates a case where the superconducting wire 32 is a tape wire.

A superconducting wire 32 having a multilayered structure may be used. For example, such a superconducting wire 32 can be configured to include a first stabilizing layer, a substrate, an intermediate layer, a superconducting layer, a protective layer, and a second stabilizing layer in this order.

The first stabilizing layer can be formed with a metal having high specific heat, such as copper or aluminum. The substrate can be formed with a high-strength metal such as a nickel-based alloy, stainless steel, or copper. The intermediate layer can have a structure including a plurality of layers of oxides. The superconducting layer can be formed with the above-mentioned superconducting material. Furthermore, the protective layer can be formed with silver, gold, or platinum, for example, and can have a function to suppress diffusion of oxygen from the superconducting layer. The second stabilizing layer can be formed with a metal having high specific heat, such as copper or aluminum.

The polymerizable composition can be applied to the superconducting wire 32, for example, by continuously transporting the superconducting wire 32 to a roller from a feeder and passing it through the polymerizable composition. The transporting rate of the superconducting wire 32 may be appropriately adjusted such that the polymerizable composition sufficiently adheres to the surface of the superconducting wire 32.

The polymerizable composition can be prepared by separately introducing the above-mentioned two or more preparative liquid formulations to a collision mixing apparatus to bring these liquid formulations into contact with each other, and mixing these. Examples of the mixing apparatus include collision mixing apparatuses for reaction injection molding (RIM), low pressure mixing apparatuses such as dynamic mixers and static mixers, and the like. The resulting polymerizable composition can be stored appropriately in any tank or the like until it is used in passing of the superconducting wire 32 therethrough. Although the viscosity of the polymerizable composition may gradually increase in some cases, to evenly apply the polymerizable composition onto the superconducting wire 32, it is desirable that the superconducting wire 32 is passed through the polymerizable composition before the polymerizable composition reaches its usable life (which is the time from a time at which the polymerizable composition is obtained to a time at which the polymerizable composition changes from a liquid state to a pudding-like state and no longer flows, and is also referred to as pot life).

Subsequently, the superconducting wire 32 passing through the polymerizable composition is wound around the winding frame 20, and then the polymerizable composition is polymerized and cured through bulk polymerization. Thus, the resin-impregnated superconducting coil 10 can be produced.

In the case where the superconducting wire 32 has no insulating layer on its surface, preferably, insulation of the superconducting wire 32 in the circumferential direction is preliminarily ensured by winding an insulating tape around the superconducting wire 32 in advance or by inserting an insulating sheet between windings of the superconducting wire 32 when the wire is wound around the winding frame 20. Examples of materials for the insulating tape and the insulating sheet include polyimide, aramid fiber paper, and the like. Alternatively, paraffin, wax, grease, or the like may be preliminarily applied onto the surface of the superconducting wire 32.

The polymerizable composition wound together with the superconducting wire 32 and impregnated into windings of the superconducting wire 32 and/or applied onto the surface of the superconducting wire 32 can be polymerized and cured, for example, by placing the workpiece in a mold formed of a male part and a female part and heating the mold. The heating temperature at this time is preferably 10 to 150°C, more preferably 30 to 120°C, still more preferably 50 to 100°C, and the heating time is preferably 20 seconds to 20 minutes, more preferably 20 seconds to 5 minutes. During heating, as needed, nitrogen gas may be sealed in the mold, and a pressure of preferably 0.1 to 1 MPa may be applied. After the heating, the mold is opened, and removed. Thus, the resin-impregnated superconducting coil 10 can be obtained.

Alternatively, the following method can also be used as a second production method. Specifically, in the second production method, the superconducting wire 32 not impregnated with the polymerizable composition is wound around the winding frame 20, and the superconducting wire 32 wound around the winding frame 20 is impregnated with the polymerizable composition. Subsequently, the polymerizable composition is polymerized and cured to produce the resin-impregnated superconducting coil 10.

The superconducting wire 32 wound around the winding frame 20 can be impregnated with the polymerizable composition by a variety of methods. The impregnation can be performed, for example, as in the case of the first production method above, by storing the polymerizable composition prepared in any tank or the like, immersing the superconducting wire 32 wound around the winding frame 20 into the tank, and keeping the immersion for a predetermined time. In this case, the polymerizable composition may be impregnated by immersing the superconducting wire 32 while removing the air or the like by vacuuming and degassing under reduced pressure. Furthermore, nitrogen gas may be sealed, and the impregnation may be performed under pressure. Alternatively, the impregnation may be performed by placing the superconducting wire 32 wound around the winding frame 20 in a mold formed of a male part and a female part, removing the air or the like by vacuuming, and injecting the polymerizable composition into the mold while degassing is being performed under reduced pressure. Furthermore, after the injection of the polymerizable composition, nitrogen gas may be sealed, and the impregnation may be performed under pressure. The pressure in impregnation of the polymerizable composition into the superconducting wire 32 wound around the winding frame 20 is preferably 0.1 to 1 MPa.

The polymerizable composition impregnated into the superconducting wire 32 wound around the winding frame 20 can be polymerized and cured in the same manner as in the first production method described above. In the second production method, the resin-impregnated superconducting coil 10 can be obtained by opening and removing the mold after the heating is completed.

As described above, the resin-impregnated superconducting coil 10 can be obtained by the first production method or the second production method. Besides, the resin-impregnated superconducting coil 10 according to the present embodiment can also be produced, for example, by preliminarily impregnating an insulating tape or sheet to be wound around the superconducting wire 32 with the polymerizable composition according to the present invention to prepare a prepreg, and winding the prepreg around the superconducting wire 32, or by inserting the prepreg between windings of the superconducting wire 32 when the superconducting wire 32 is wound around the winding frame 20, and polymerizing and curing the polymerizable composition by heating after winding of the superconducting wire 32 is completed.

Although the resin-impregnated superconducting coil 10 according to the present embodiment can have any specifications, for example, the inner size can be in the range of 30 to 400 mm, the outer size can be in the range of 100 to 1000 mm, and the number of turns can be in the range of 100 to 5000 turns.

The resin-impregnated superconducting coil 10 according to the present embodiment includes the norbornene-based resin prepared through bulk polymerization of the above-mentioned polymerizable composition according to the present invention. The norbornene-based resin prepared from the polymerizable composition according to the present invention has relatively low bonding strength to the superconducting wire 32 constituting the resin-impregnated superconducting coil 10 while having high mechanical properties even at a cryogenic temperature. For this reason, even when thermal shrinkage of the norbornene-based resin occurs during cooling, breakage of the resin-impregnated superconducting coil 10 due to tensile stress caused by the thermal shrinkage can be suppressed, and thus occurrence of a quench can be effectively suppressed.

In addition, the polymerizable composition according to the present invention contains rare earth element-containing particles having a number-based modal size of 0.05 µm or more and less than 1.5 µm. Because such rare earth element-containing particles have high thermal storage properties, the norbornene-based resin prepared from the polymerizable composition according to the present invention can have a high specific heat at a cryogenic temperature, and thus can effectively suppress occurrence of quenching. Furthermore, because the rare earth element-containing particles can act to absorb the generated heat and relaxation of an increase in temperature, occurrence of thermal runaway in the resin-impregnated superconducting coil 10 can be effectively suppressed. Specifically, the norbornene-based resin prepared from the polymerizable composition according to the present invention can have a high specific heat at a temperature of 4 K, preferably 3.0 J/K/kg or more, more preferably 5.0 J/K/kg or more, still more preferably 10.0 J/K/kg or more, particularly preferably 15.0 J/K/kg or more. The upper limit of the specific heat at a temperature of 4 K of the norbornene-based resin is not particularly limited, and is 100 J/K/kg or less, for example.

Moreover, the rare earth element-containing particles contained in the polymerizable composition according to the present invention are ultrafine particles and have a large specific surface area. Due to their excellent heat dissipating effect, the resin-impregnated superconducting coil 10 according to the present embodiment can be cooled in a short time.

Owing to such properties, the resin-impregnated superconducting coil 10 according to the present embodiment can be suitably used as a superconducting coil for generating a magnetic field in nuclear magnetic resonance (NMR) instruments, magnetic resonance imaging (MRI) diagnostic apparatuses, heavy ion radiotherapy apparatuses, or superconducting apparatuses for superconducting Maglev railroad vehicles.

### EXAMPLES

Hereinafter, the present invention will be described based on Examples, but these Examples should not be construed as limitations to the present invention. To be noted, "parts" and "%" are mass-based unless otherwise specified.

### <Example 1>

100 Parts of an RIM monomer (available from ZEON Corporation), 500 parts of Gd₂O₃ particles having a number-based modal size measured by a light scattering method (laser diffraction/scattering method) of 0.9 µm, 1.5 parts of a coupling agent 1 (vinyltrimethoxysilane, available from Shin-Etsu Chemical Co., Ltd.), 3 parts of a coupling agent 2 (bicycloheptenylethyltriethoxysilane, available from Shin-Etsu Chemical Co., Ltd.), and 3 parts of a dispersant (product name "RHEODOL SP-030V", isopropyltrisstearoyl titanate, available from Kao Corporation) were mixed to prepare a preparative liquid formulation (i). The RIM monomer consists of 90 parts of dicyclopentadiene and 10 parts of tricyclopentadiene as norbornene-based monomers.

0.3 Parts of a ruthenium catalyst represented by General Formula (7) as a metathesis polymerization catalyst, 30 parts of 2,6-di-t-butyl-p-cresol (BHT, antioxidant), and 30 parts of triphenylphosphine were dissolved in 39.7 parts of cyclopentanone to prepare a preparative liquid formulation (ii). 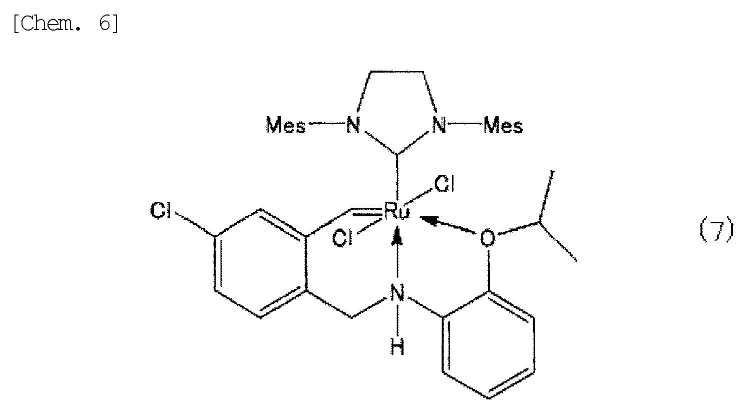 (where Mes represents a mesityl group.)

The mold used was a mold for flat plate molded article reaction injection molding formed of two stainless steel plates and having an inner space measuring 245 mm in length × 210 mm in width × 4 mm in thickness. The mold for reaction injection molding has a structure in which a reaction solution injection hole is provided in the lowest portion of one of the stainless steel plates.

The preparative liquid formulations (i) and (ii) prepared above were mixed in a mass ratio (i): (ii) = 600:1, followed by defoaming in vacuum. Thereafter, the mixture was injected into the mold for reaction injection molding through the reaction solution injection hole. The mold was heated for 30 minutes in an oven heated to 40°C, and then was heated at 120°C for 60 minutes to prepare a polymerized and cured norbornene-based resin.

The resulting norbornene-based resin was evaluated for the specific heat at a temperature of 4 K using a physical properties evaluation system (product name "PPMS", available from Quantum Design Japan, Inc.) as a measurement apparatus. The result showed that the norbornene-based resin in Example 1 had a high specific heat at a temperature of 4 K, which was 20 J/K/kg. From this fact, due to its high thermal storage properties, the norbornene-based resin in Example 1, when used in a superconducting coil, can effectively suppress occurrence of a quench. Furthermore, the norbornene-based resin in Example 1 can absorb the generated heat to relax an increase in temperature, and thus can effectively suppress occurrence of thermal runaway. For this reason, a resin-impregnated superconducting coil having high conduction stability and high reliability is obtained. The norbornene-based resin in Example 1 also has excellent heat dissipating properties, and can provide a resin-impregnated superconducting coil which can be cooled in a short time.

The polymerizable composition prepared in Example 1 has low viscosity, and demonstrates sufficient impregnation properties to the superconducting coil when it is used in the superconducting coil. Thus, the polymerizable composition prepared in Example 1 can be suitably used in production of the resin-impregnated superconducting coil. The norbornene-based resin prepared has high mechanical properties even at a cryogenic temperature, and also has relatively low bonding strength to the material of the wire constituting the superconducting coil. Thus, even when thermal shrinkage of the norbornene-based resin occurs during cooling, breakage of the superconducting coil due to tensile stress caused by the thermal shrinkage can be suppressed. These also contribute to effective suppression of occurrence of a quench caused by breakage of the superconducting coil.

### [Reference Signs List]

- 10: resin-impregnated superconducting coil
- 20: winding frame
- 30: coil body
- 32: superconducting wire
- 34: wire protective layer

## Claims

1. A polymerizable composition comprising a norbornene-based monomer, rare earth element-containing particles having a number-based modal size of 0.05 µm or more and less than 1.5 um, and a metathesis polymerization catalyst.

2. The polymerizable composition according to claim 1, wherein the rare earth element-containing particles contain at least one rare earth element selected from the group consisting of cerium, praseodymium, gadolinium, dysprosium, holmium, and erbium.

3. The polymerizable composition according to claim 1 or 2, wherein the content of the rare earth element-containing particles is 4 to 90% by mass.

4. The polymerizable composition according to any one of claims 1 to 3, wherein the polymerizable composition is in the form of two or more preparative liquid formulations each of which alone is not capable of polymerization, and can be formed by combining the preparative liquid formulations.

5. A resin-impregnated superconducting coil prepared by impregnating a superconducting coil with a norbornene-based resin prepared through bulk polymerization of the polymerizable composition according to any one of claims 1 to 4.

6. The resin-impregnated superconducting coil according to claim 5, wherein the norbornene-based resin has a specific heat at a temperature of 4 K of 3.0 J/K/kg or more.

7. The resin-impregnated superconducting coil according to claim 5 or 6, wherein the superconducting coil is a superconducting coil for generating a magnetic field in a nuclear magnetic resonance (NMR) instrument, a magnetic resonance imaging (MRI) diagnostic apparatus, or a heavy ion radiotherapy apparatus.
